# EUROPEAN PATENT SPECIFICATION

(11) **EP 0 346 159 B1**
(45) Date of publication and mention of the grant of the patent: **18.11.1993**
(21) Application number: 89305922.0
(22) Date of filing: 12.06.1989
(51) Int. Cl.: C02F 11/14, C02F 1/56

(54) **Method of coagulating sludge**
Verfahren für die Flockung von Schlamm
Procédé pour la coagulation de boues

(30) Priority: 10.06.1988 JP 142946/88
(43) Date of publication of application: 13.12.1989
(73) Proprietor: AOKI CORPORATION, Osaka (JP)
(72) Inventor: Tono, Sho, Setagaya-ku Tokyo (JP); Miki, Toshiyuki, 350-2, Unomori Sagamihara-shi Kanagawa (JP); Dairokuno, Yoshihide Aoki Corporation, Kanagawa (JP); Kataoka, Jyun, Chiba-shi, Chiba (JP)
(74) Representative: Pett, Christopher Phineas

(56) References cited:
- EP-A- 0 055 489
- DE-A- 1 642 795
- GB-A- 967 607

## Description

The present invention relates to a novel method of coagulating sludge. More particularly it relates to a method which permits settlement and coagulation of sludge produced from a river, a lake or an engineering work site with high efficiency to largely facilitate dewatering and solidification.

Various methods have conventionally been tried to treat contaminated, sludge-containing water or water having sludge therein e.g. floating on a river or a lake, or sludge resulting from engineering works. The usual practice for treating such sludge is to cause it to settle by addition of an inorganic or polymer coagulant or a supplementary reagent, and to dewater and solidify the resultant coagulum for rejection or re-use.

However, these conventional methods have not been successful in causing highly efficient settlement and coagulation of sludge at a low cost.

Many further coagulants and supplementary reagents have been developed and methods of their application have been tested, but it has not yet been possible to conduct an industrially large-scale treatment at a low cost.

In the conventional sludge treatment methods, sludge to be covered has been believed to be negatively charged in general, so that a practice has been adopted of adding a cationic inorganic salt such as iron or aluminium, or a cationic polymer coagulant, to cause coagulation of sludge particles into flocks, and then adding a supplementary anionic reagent to cause settlement of the flocks.

However, whichever cationic coagulant or anionic reagent is used in the conventional methods, (rejection) separation and disposal of the large amount of flocks having a high water content, has required a mechanical dewatering by means of filter press or a belt press. In the absence of this mechanical dewatering, this disposal coagulation has required large areas of land, solidification requiring a long period of time, and even once solidified, rainfall may have cause swelling of the material to retard the procedure.

A further problem with conventional methods is that the use of an inorganic salt renders the pH of the supernatant liquid acidic, so that the necessary neutralization thereof adds a considerable cost.

We have surprisingly found that it is very effective to first add an anionic polymer coagulant to the sludge, and then to add a cationic polymer coagulant. This is in contrast to the conventional and general understanding of the mechanism of the procedure. Our belief is that settlement and coagulation of sludge are caused, not by a simple ionic interaction of positive and negative ions, but by a complicated mechanism in a colloidal state.

The use of coagulants in this way has been described in EP-A-0 055 489, DE-A-1642795 and GB-967607. However, we have in addition found that selection of certain properties of the coagulants allows the degree of settlement and dewatering thereof obtainable by this process to be significantly higher. These properties, if discussed at all in the prior art, have only been discussed in very general and unrelated terms.

The present invention, on the basis of the above-mentioned finding, therefore seeks to provide a novel method of coagulating sludge, which permits an improvement over conventional methods, settlement and coagulation of sludge at a high efficiency and lower cost, and will lead to a considerable reduction of the burden of mechanical dewatering and solidification.

In particular the present invention provides a new method for using polymer coagulants which is contrary to conventional practice and teaching, and a method of coagulating sludge permitting a large- scale treatment at a high efficiency and a lower cost with the use of such a new method.

These and other aspects and advantages of the invention will become more apparent in the detailed description and examples which follow.

According to one aspect of the invention, we provide a method of coagulating sludge, which comprises adding sequentially to sludge an anionic polymer coagulant and a cationic polymer coagulant wherein the anionic polymer coagulant comprise a 0.1% pure aqueous solution with a pH of from 6 to 8, and a viscosity of at least 0.1 kgm⁻¹s⁻¹ (100 cp) (25°C, a B-type rotary viscosimeter, 30 rpm) and the cationic polymer coagulant has a pH of from 3 to 6 and a viscosity of at least 0.02 kgm⁻¹s⁻¹ (20 cp). This may be followed by an additional anionic polymer coagulant.

In consequence of the procedure to be followed, and assuming that the sludge is negatively (-) charged, the present invention comprises adding a first anionic polymer coagulant to the sludge to increase the negative charge of sludge as a whole, and then adding a cationic polymer coagulant to rapidly accelerate the settlement of flocks. Addition of the first anionic polymer coagulant causes the state of charge of sludge particles and the colloidal state to change, and the subsequent addition of the cationic polymer coagulant will allow settlement in bulk.

When the supernatant liquid shows a somewhat high turbidity due to the addition of the cationic polymer coagulant, addition of a further anionic coagulant permits complete settlement, thus giving a clear supernatant liquid.

The most suitable type of coagulant will depend inter alia, on its affinity towards the sludge in question, and cost. There is therefore no limit on which polymer coagulants may be used but a preferred example is an acrylamide polymer coagulant. For the cationic coagulant, any polymer coagulant with a pH of from 3 to 6 such as an ester coagulant may be employed.

The amount of coagulant to be added, varies with the treatment specifications of each batch, sludge concentration, or whether there is to be a continuous process. However there may be about 1 to 4% total of all coagulants added relative to the volume of material to be treated on the assumption of a sludge concentration of about 3 to 5%. This is not of course a limitative standard.

### Examples 1 to 3

Comparison tests were carried out on sludge-bearing water from lakes and rivers in three localities (A), (B) and (C) in the Kanto area (Japan).

The 1000 cc of test-sludge for each settlement test had a concentration of 3% and was conducted in a 1000 cc glass cylinder.

In Examples 1 to 3, an anionic polymer coagulant (18 cc) and a cationic polymer coagulant (12 cc) were added in this order. As the anionic polymer coagulant, an acrylamide polymer coagulant (acrylamide acrylic acid co-polymer) with a pH of from 6 to 8 and a viscosity of at least 0.14 kgm⁻¹s⁻¹ (140 cp) was used. As the cationic polymer coagulant, an ester polymer coagulant (poly-aminoalkyl methacrylate) having a pH of from 3 to 5 and a viscosity of at least 0.02 kgm⁻¹s⁻¹ (20 cp) was employed.

In the comparison Examples, the same cationic (inorganic metal salt;AlCl₃) coagulant (6 cc) and then the same anionic polymer coagulant (16 cc) were added in this sequence.

Values of the amount of settlement (cc) after the lapse of five minutes and those of the water content (%) after 24 hours dewatering are shown in Table 1. As is clear from Examples 1 to 3 of the present invention, sludge treated in accordance with the present invention has an excellent settlement property and degree of dewatering. Settlement and coagulation of the sludge are rapid, and the remaining water content is significantly lower.

**Table 1**

| | Specimen | Amount of settlement after lapse of 5 min. (cc) | Water content (%) after dewatering of 24 hrs. (a) |
|---|---|---|---|
| Example 1 | A | 150 | 63 |
| Comparison 1 | A | 280 | 82 |
| Example 2 | B | 140 | 61 |
| Comparison 2 | B | 260 | 83 |
| Example 3 | C | 80 | 52 |
| Comparison 3 | C | 160 | 76 |

| | | | |
|---|---|---|---|
| (a) Water content = w/(100 + w) x 100 (%) w = percentage of the weight of water contained in soil to weight of soil particles | | | |

### Example 4

In a manner similar and to a similar volume of test material to that in Examples 1 to 3, an anionic polymer coagulant (partially sulfomethylated polyacrylamide) (12 cc), a cationic polymer coagulant (polyethylene imine) (12 cc) and then another anionic polymer coagulant (poly-Na-acrylic acid) (6 cc) here added in this-order to Specimen C.

The specimen showed an amount of settlement of 80 cc after the lapse of five minutes and a water content of 57% after the lapse of 24 hours. No turbidity of the supernatant liquid was observed.

According to the present invention, it is possible to coagulate sludge at a far higher efficiency with a far smaller dewatered load than by using conventional methods.

Spontaneous dewatering suffices for the purpose of dewatering sludge, and in the case of mechanical dewatering, a capacity of treatment about twice as high as the conventional one is possible. It is also not necessary to add any inorganic salt or pH adjusting reagent to the resultant for neutralisation purposes, thus permitting large-scale sludge treatment at a much lower cost.

## Claims

1. A method of coagulating sludge which,comprises adding sequentially to the sludge an anionic polymer coagulant and a cationic polymer coagulant characterised in that the anionic polymer coagulant comprises a 0.1% pure aqueous solution, a pH of 6 to 8 and a viscosity of at least 0.1 kgm⁻¹s⁻¹ (100 cp) (25°C, a B-type rotary viscosimeter, 30 rpm), and the cationic polymer coagulant has a pH of 3 to 6 and a viscosity of at least 0.02 kgm⁻¹s⁻¹ (20 cp).

2. A method of coagulating sludge as claimed in claim 1, which comprises adding a further anionic polymer coagulant after addition of said cationic polymer coagulant.

3. A method as claimed in claim 1 or claim 2 wherein the anionic coagulant is an acrylamide polymer.

4. A method as claimed in any one of claims 1 to 3 wherein the cationic coagulant is an ester coagulant.

5. A method as claimed in any of claims 1 to 4 wherein the ratio of anionic to cationic polymer coagulant addition is 1.5:1.

6. A method of dewatering sludge coagulated by the method as claimed in any of claims 1 to 5, which comprises putting coagulated sludge in a cloth bag or a metal net bag.

## Patentansprüche

1. Verfahren zur Koagulation von Schlamm, das die aufeinanderfolgende Zugabe zu dem Schlamm von einem anionischen polymeren Koagulationsmittel und einem kationischen polymeren Koagulationsmittel umfaßt, dadurch gekennzeichnet, daß das anionische polymere Koagulationsmittel eine 0,1 %ige reine wäßrige Lösung, einen pH von 6 bis 8 und eine Viskosität von zumindest 0,1 kgm⁻¹s⁻¹ (100 cp) (25°C, Rotationsviskosimeter vom B-Typ, 30 Umdrehungen/min) umfaßt, und das kationische polymere Koagulationsmittel einen pH von 3 bis 6 und eine Viskosität von zumindest 0,02 kgm⁻¹s⁻¹ (20 cp) besitzt.

2. Verfahren zur Koagulation von Schlamm gemäß Anspruch 1, das die Zugabe eines weiteren anionischen polymeren Koagulationsmittels nach der Zugabe des kationischen polymeren Koagulationsmittels umfaßt.

3. Verfahren gemäß Anspruch 1 oder 2, worin das anionische Koagulationsmittel ein Acrylamidpolymeres ist.

4. Verfahren gemäß einem der Ansprüche 1 bis 3, worin das kationische Koagulationsmittel ein Esterkoagulationsmittel ist.

5. Verfahren gemäß einem der Ansprüche 1 bis 4, worin das Verhältnis von anionischem zu kationischem polymeren Koagulationsmittelzusatz 1,5:1 beträgt.

6. Verfahren zur Entwässerung von nach dem Verfahren gemäß einem der Ansprüche 1 bis 5 koaguliertem Schlamm, das das Einbringen von koaguliertem Schlamm in einen Tuchbeutel oder einen Metallnetzbeutel umfaßt.

## Revendications

1. Procédé pour coaguler des boues, qui consiste à ajouter successivement aux boues un coagulant polymère anionique et un coagulant polymère cationique, caractérisé en ce que le coagulant polymère anionique comprend une solution aqueuse, pure à 0,1 %, ayant un pH de 6 à 8 et une viscosité d'au moins 0,1 kg.m-1.s-1 (100 cP) (à 25°C, au viscosimètre rotatif de type a à 30 t/min), le coagulant polymère cationigue ayant un pH de 3 à 6 et une viscosité d'au moins 0,02 kg.m-1.s-1 (20 cP).

2. Procédé pour coaguler des boues selon la revendication 1, qui consiste à ajouter un autre coagulant polymère anionique après addition du coagulant polymère cationique.

3. Procédé selon la revendication 1 ou 2, dans lequel le coagulant anionique est un polymère de l'acrylamide.

4. Procédé selon l'une quelconque des revendications 1 à 3, dans lequel le coagulant cationique est un coagulant de type ester.

5. Procédé selon l'une quelconque des revendications 1 à 4, dans lequel le rapport de la quantité ajoutée du coagulant polymère anionique au coagulant polymère cationique est de 1,5:1.

6. Procédé pour déshydrater des boues coagulées par le procédé selon l'une quelconque des revendications 1 à 5, qui consiste à placer les boues coagulées dans un sac en étoffe ou dans un sac en une toile métallique.
